# EUROPEAN PATENT APPLICATION

(11) **EP 4 593 331 A1**
(43) Date of publication of application: **30.07.2025**
(21) Application number: 23876409.6
(22) Date of filing: 05.09.2023
(51) Int. Cl.: H04L 12/40

(54) **BUS COMMUNICATION CONTROL METHOD AND APPARATUS, AND DEVICE AND STORAGE MEDIUM**

(30) Priority: 10.10.2022 CN 202211236828
(71) Applicant: Hefei Midea Refrigerator Co., Ltd., Hefei, Anhui 230088 (CN); Hefei Hualing Co., Ltd., Hefei, Anhui 230601 (CN); Midea Group Co., Ltd., Foshan, Guangdong 528311 (CN)
(72) Inventor: WANG, Jun, Hefei, Anhui 230088 (CN); ZHOU, Yue, Hefei, Anhui 230088 (CN); LIU, Bichao, Hefei, Anhui 230088 (CN); ZHENG, Haimu, Hefei, Anhui 230088 (CN); ZHU, Yunfei, Hefei, Anhui 230088 (CN)
(74) Representative: RGTH
(86) International application number: PCT/CN2023/117090
(87) International publication number: WO 2024/078204

(57) **Abstract**

The present application relates to the technical field of data communication, and provides a method, an apparatus, a device for controlling bus communication and a storage medium. In the present application, it is detected that whether there is a target response requirement from another load unit before receiving a master control authority transfer request from a first load unit and transferring the master control authority to the first load unit, and the master control authority is transferred to the target load unit corresponding to the master control authority transfer request when there is the master control authority in the main control board and there is no target response requirement.

## Description

This application claims priority to Chinese Patent Application No. 202211236828.8, filed on October 10, 2022, the entire contents of which are incorporated herein by reference.

### TECHNICAL FIELD

The present application relates to the technical field of air conditioner control, and in particular to a method, an apparatus and a device for controlling bus communication, and a storage medium.

### BACKGROUND

With the popularity of smart homes, the communication mode between the internal components of various smart device can be that the main controller controls all the loads, or it can be a multi-master and multi-slave mode. In the conventional multi-master and multi-slave communication mode, if the load of a device communicates as a host, the communication authority of the host is directly transferred, and there may be a situation where other requests cannot be responded to in time, especially some requests that require quick response, which greatly affects the user experience.

The above content is provided solely to assist in understanding the technical solution of the present application and does not constitute an admission that the above content is prior art.

### SUMMARY

### TECHNICAL PROBLEM

The main objective of the present application is to provide a method, an apparatus, and a device for controlling bus communication, and a storage medium, aiming to solve the technical problem in the related art that in a multi-master and multi-slave communication mode, the transfer of master control authority will lead to the inability to respond to the quick response requirements of other loads in a timely manner.

### TECHNICAL SOLUTION

In order to achieve the above objective, the present application provides a method for controlling bus communication, which is applied to a main control board, the main control board is connected to at least one load unit through a communication bus, and the method includes the following steps:
in response to detecting a master control authority transfer request sent by a first load unit, determining whether there is a target response requirement from a second load unit;
determining whether there is a master control authority; and
in response to that there is the master control authority and there is no target response requirement, transferring the master control authority to a target load unit corresponding to the master control authority transfer request.

In an embodiment, after the determining whether there is the master control authority, the method further includes:
in response to that there is no master control authority and there is a target response requirement, determining a host load unit with the master control authority; and
revoking the master control authority of the host load unit.
In an embodiment, the revoking the master control authority of the host load unit includes:
   detecting whether there is an ongoing data transmission task in the host load unit; and
   in response to that there is the ongoing data transmission task in the host load unit, interrupting the data transmission task and revoking the master control authority of the host load unit.

In an embodiment, after the detecting whether there is the ongoing data transmission task in the host load unit, the method further includes:
in response to that there is no ongoing data transmission task in the host load unit, controlling the target load unit to release the master control authority and revoking the master control authority.

In an embodiment, after the determining whether there is the master control authority, the method further includes:
in response to that there is the master control authority and there is the target response requirement, locking the master control authority; and
after a preset time interval, returning to the determining whether there is the target response requirement from the second load unit.

In an embodiment, the locking the master control authority includes:
determining a load unit to be operated and a corresponding operation task according to the target response requirement and a preset load unit priority; and
in response to that the load unit to be operated has not completed the operation task, locking the master control authority.

In an embodiment, before the in response to detecting the master control authority transfer request sent by the first load unit, determining whether there is the target response requirement from the second load unit, the method further includes:
obtaining identification information of each load unit;
generating a broadcast header according to the identification information and a preset broadcast communication instruction; and
broadcasting and polling header information through the communication bus to verify whether there is a fault on the communication bus;
and the in response to detecting the master control authority transfer request sent by the first load unit, determining whether there is the target response requirement from the second load unit includes:
   in response to that there is no fault and a master control authority transfer request sent by the first load unit is detected, determining whether there is a target response requirement from the second load unit.

In addition, in order to achieve the above objectives, the present application further provides an apparatus for controlling bus communication, including: a processor and a memory. The processor is configured to execute the following program modules stored in the memory:
a detection module configured to: in response to detecting a master control authority transfer request sent by a first load unit, determine whether there is a target response requirement from a second load unit;
a determination module configured to determine whether there is a master control authority; and
a transfer module configured to: in response to that there is the master control authority and there is no target response requirement, transfer the master control authority to a target load unit corresponding to the master control authority transfer request.

In an embodiment, the determination module is further configured to:
in response to that there is no master control authority and there is a target response requirement, determine a host load unit with the master control authority; and
revoke the master control authority of the host load unit.

In an embodiment, the determination module is further configured to:
detect whether there is an ongoing data transmission task in the host load unit; and
in response to that there is the ongoing data transmission task in the host load unit, interrupt the data transmission task and revoke the master control authority of the host load unit.

In an embodiment, the determination module is further configured to:
in response to that there is no ongoing data transmission task in the host load unit, control the target load unit to release the master control authority and revoke the master control authority.

In an embodiment, the determination module is further configured to:
in response to that there is the master control authority and there is the target response requirement, lock the master control authority; and
after a preset time interval, return to the determining whether there is the target response requirement from the second load unit.

In an embodiment, the determination module is further configured to:
determine a load unit to be operated and a corresponding operation task according to the target response requirement and a preset load unit priority; and
in response to that the load unit to be operated has not completed the operation task, lock the master control authority.

In an embodiment, the checking module is further configured to:
obtain identification information of each load unit;
generate a broadcast header according to the identification information and a preset broadcast communication instruction; and
broadcast and poll header information through the communication bus to verify whether there is a fault on the communication bus;
and the in response to detecting the master control authority transfer request sent by the first load unit, determining whether there is the target response requirement from the second load unit includes:
   in response to that there is no fault and a master control authority transfer request sent by the first load unit is detected, determining whether there is a target response requirement from the second load unit.

In addition, in order to achieve the above objectives, the present application further provides a device for controlling bus communication, which includes: a memory, a processor, and a program for controlling bus communication stored in the memory and executable on the processor. The program for controlling bus communication, when executed by the processor, implements the steps of the method for controlling bus communication as described above.

In addition, in order to achieve the above objectives, the present application further provides a computer-readable storage medium. The computer-readable storage medium stores a program for controlling bus communication, and when executed by a processor, the steps of the method for controlling bus communication as described above are implemented.

In addition, in order to achieve the above objectives, the present application further provides a computer program product, including a computer program, which implements the steps of the method for controlling bus communication described above when executed by a processor.

### TECHNICAL EFFECT

The present application discloses a method for controlling bus communication, which is applied to a main control board, and the main control board is connected to at least one load unit through a communication bus; the method for controlling bus communication includes: when a master control authority transfer request sent by a first load unit is detected, judging whether there is a target response requirement from a second load unit; judging whether there is master control authority; and when there is the master control authority and there is no target response requirement, transferring the master control authority to the target load unit corresponding to the master control authority transfer request. Compared with the related art, the present application detects whether there is a target response requirement from another load unit before receiving the master control authority transfer request from the first load unit and transferring the master control authority to the first load unit. When the main control board has the master control authority and there is no target response requirement, the master control authority is transferred to the target load unit corresponding to the master control authority transfer request, thereby avoiding the technical problem in the related art that in a multi-master and multi-slave communication mode, the transfer of master control authority will lead to the inability to respond to the quick response requirements of other loads in a timely manner, thereby improving the user experience.

### BRIEF DESCRIPTION OF THE DRAWINGS

FIG. 1 is a schematic structural diagram of a device for controlling bus communication in a hardware operating environment according to an embodiment of the present application.
FIG. 2 is a flowchart of the method for controlling bus communication according to a first embodiment of the present application.
FIG. 3 is a bus communication system structural block diagram of the method for controlling bus communication according to an embodiment of the present application.
FIG. 4 is a flowchart of the method for controlling bus communication according to a second embodiment of the present application.
FIG. 5 is a broadcast polling control logic schematic diagram of the method for controlling bus communication according to an embodiment of the present application.
FIG. 6 is a structural block diagram of an apparatus for controlling bus communication according to the first embodiment of the present application.

The realization of the purposes, functional features, and advantages of the present application will be further explained in conjunction with embodiments and with reference to the accompanying drawings.

### DETAILED DESCRIPTION OF THE EMBODIMENTS

It should be understood that the specific embodiments described herein are only used to explain the present application and are not used to limit the present application.

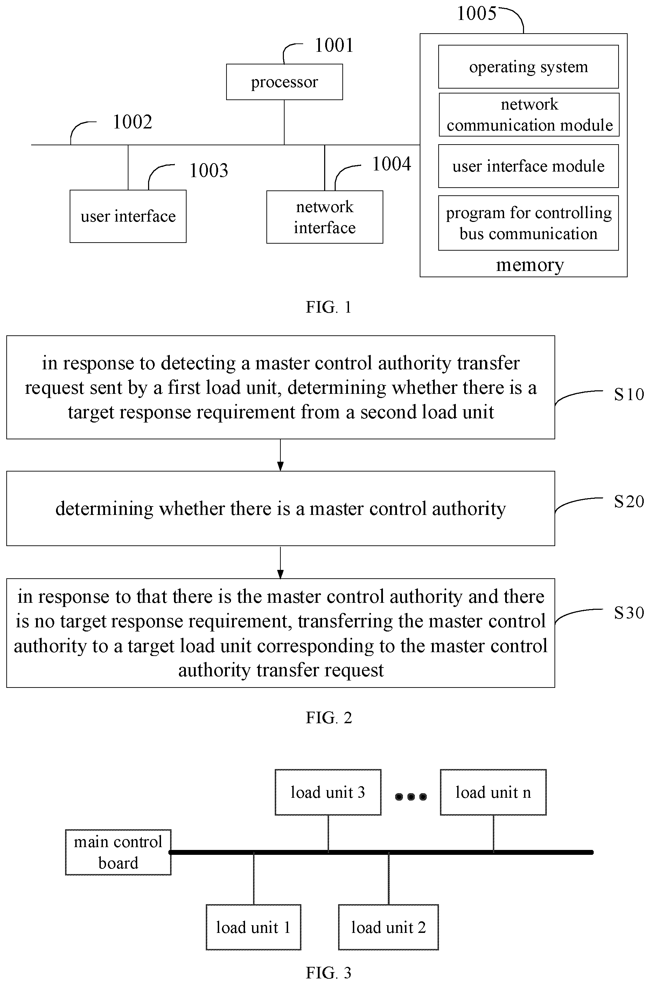

As shown in FIG. 1, which is a schematic structural diagram of a device for controlling bus communication in a hardware operating environment according to an embodiment of the present application.

As shown in FIG. 1, the air conditioner may include: a processor 1001, such as a central processing unit (CPU), a communication bus 1002, a user interface 1003, a network interface 1004, and a memory 1005. The communication bus 1002 is used to realize the connection and communication between these components. The user interface 1003 may include a display, an input unit such as a keyboard, and the user interface 1003 may also include a standard wired interface and a wireless interface. The network interface 1004 may include a standard wired interface and a wireless interface (such as a Wireless-Fidelity (Wi-Fi) interface). The memory 1005 may be a high-speed random access memory (RAM), or a stable non-volatile memory (NVM), such as a disk memory. The memory 1005 may also be a storage apparatus independent of the aforementioned processor 1001.

Those skilled in the art will appreciate that the structure shown in FIG. 1 does not limit the device for controlling bus communication and may include more or fewer components than shown, or a combination of certain components, or a different arrangement of components.

As shown in FIG. 1, the memory 1005 as a storage medium may include an operating system, a network communication module, a user interface module and a program for controlling bus communication.

In the device for controlling bus communication shown in FIG. 1, the network interface 1004 is mainly used for data communication with the network server; the user interface 1003 is mainly used for data interaction with the user; the processor 1001 and the memory 1005 in the device for controlling bus communication of the present application can be set in the device for controlling bus communication, and the device for controlling bus communication calls the program for controlling bus communication stored in the memory 1005 through the processor 1001, and executes the method for controlling bus communication provided by the present application.

The present application provides a method for controlling bus communication. As shown in FIG. 2, which is a flowchart of the method for controlling bus communication according to a first embodiment of the present application.

In an embodiment, the method for controlling bus communication includes the following steps:
Step S10: in response to detecting a master control authority transfer request sent by a first load unit, determining whether there is a target response requirement from a second load unit.

It should be noted that the executor of the method of the present application may be a main control board of an electronic device with data processing or data transmission. The electronic device may be a smart refrigerator or smart home appliance, etc., or other devices or systems that can achieve the same or similar functions, which is not limited in the present application. The present application will be explained using the main control board of a smart refrigerator as an example.

It can be understood that in the conventional multi-master and multi-slave bus communication mode, as shown in FIG. 3, the bus communication system generally includes a main control board, at least one load unit and a communication bus. The main control board and each load unit are connected to the communication bus. Depending on the device where the bus communication system is located, the various load units are also different. Among them, the load unit includes: a slave control board and a load component. For example, the compressor load unit includes: a compressor and a compressor slave control board, and the display panel load unit includes: a display panel and a display panel slave control board. The present application does not make any specific restrictions on this.

In the bus communication system, only the host communication node with master control authority can actively send data to the outside, while other communication nodes can feedback response information by receiving data on the communication main line, and some load units can also receive signal inputs from the outside. For example: interactive panels or touch displays, etc., can receive touch signal inputs from users, which is not limited in the present application.

In the bus communication system, the master control authority is generally on the main control board, which is used to respond to the requests or response signals of each load unit in a timely manner. Only after a load unit requests the transfer of master control authority from the main control board and the load unit receives the master control authority can it actively send data to the communication main line to realize active data interaction.

In addition, in the above-mentioned bus communication system, the data interaction between the main control board and each load unit is carried out through broadcast polling to realize communication between each node.

It is worth noting that the first load unit can be any energy-consuming load unit in the above-mentioned smart refrigerator. In the smart refrigerator provided in the present application, a single load is integrated with the corresponding slave control panel to form a load unit, for example: a refrigeration fan unit, a wind direction unit, a display panel unit, and a motor unit, etc., and the master control authority transfer request can be a request instruction generated by the load unit due to data packet updates, software upgrades, or data sharing needs, which is not limited in the present application.

In addition, the slave control board in the present application may include but is not limited to communication boards such as display control boards, microcrystalline boards, frequency conversion boards, Wi-Fi boards, and expansion boards, and may also include other types of communication boards, which are not limited in this embodiment.

For example: as shown in FIG. 3, load 1 in FIG. 3 needs to share data with other loads. At this time, since the master control authority is on the main control board, it is necessary to send a data sharing request to the main board under normal conditions to send the data to be shared to the main control board. After the main control board receives the data to be shared, it uploads the data to be shared to the communication main line for broadcasting. At this time, load 1 receives the data to be shared first, and load 1 will feedback a received response instruction. At this time, the main control board will upload the data to be shared to the communication main line for broadcasting again. At this time, load 1 will no longer feedback a response instruction, and load 2 will feedback a received response instruction based on the received data. The data sharing task will not be completed until all load units on the communication bus have fed back response instructions.

It should be noted that the target response requirement refers to a requirement that requires the main control board to respond quickly. For example, the user increases the refrigeration temperature of the refrigerator through the display panel or buttons. At this time, the refrigeration fan or electric fan does not need to operate immediately, but the main control board needs to immediately adjust the light-emitting diode (LED) display content displayed on the display panel to facilitate the user to determine whether the temperature adjustment is successful. Adjusting the display content of the display panel requires the main control board to respond quickly. If the main control board does not have the master control authority at this time, it will cause the display of the display panel to be wrong, thereby reducing the user experience.

Step S20: determining whether there is a master control authority.

It should be noted that in the present application, the master control authority can be on the main control board or on each load unit, and the master control authority can be transferred. However, in the normal data communication process, the master control authority is generally on the main control board, and the transfer of the master control authority needs to be implemented through the main control board. The master control authority cannot be transferred directly from one load unit to another load unit.

Step S30: in response to that there is the master control authority and there is no target response requirement, and in response to that the main control board receives an authority transfer instruction of the first load unit, transferring the master control authority to a target load unit corresponding to the master control authority transfer request.

During the specific implementation process, if the main control board receives the authority transfer instruction from the first load unit and other loads do not require a quick response, it will transfer the master control authority to the first load unit on the premise that it itself has the master control authority, so that the first load unit can perform the corresponding data processing task.

Furthermore, after step S20, the method further includes:
in response to that there is the master control authority and there is the target response requirement, locking the master control authority; and
after a preset time interval, returning to the determining whether there is the target response requirement from the second load unit.

It can be understood that if the main control board receives the authority transfer instruction of the first load unit, and it itself does not have the master control authority, but there is a quick response requirement for other loads, it means that the main control board needs to respond quickly to the request of the load unit. In order not to affect the user experience, at this time, the main control board needs to lock the master control authority to avoid the transfer of authority, which will lead to user control errors.

In an embodiment, since the quick response requirements of the refrigerator load unit often correspond to multiple operation processes, for example, when the user needs to lower the temperature of the refrigerator freezer, the first thing that needs to be responded to quickly is to update the temperature display value on the display panel, and secondly, it is also necessary to control the speed of the refrigeration fan corresponding to the freezer and the operating frequency of the compressor, etc. Therefore, in order to meet the user's control needs, an interval time can be set so that after the quick response requirement is completed, it returns to the step of determining whether there is a target response requirement from the second load unit, so as to re-perform the authority transfer operation.

Furthermore, the locking of the master control authority includes:
determining a load unit to be operated and a corresponding operation task according to the target response requirement and a preset load unit priority; and
in response to that the load unit to be operated has not completed the operation task, locking the master control authority.

It should be noted that since there may be multiple load units controlled by a target response requirement, in the actual control process, it may not be necessary to perform authority control on each load unit that needs to be operated. For example, when the user needs to lower the temperature of the freezer compartment of the refrigerator, it is first necessary to control the numerical display of the display panel, and secondly, control the speed of the refrigeration fan corresponding to the freezer compartment and the operating frequency of the compressor, etc. However, the refrigeration fan and compressor do not require real-time and quick control by the main control board. Therefore, the only load unit to be operated is the display panel. When the display panel has not completed the task of updating the numerical value, the main control board's master control authority needs to be locked to avoid display errors.

Furthermore, after step S20, the method further includes:
in response to that there is no master control authority and there is a target response requirement, determining a host load unit with the master control authority; and
revoking the master control authority of the host load unit

It is worth noting that when the main control board does not have master control authority, but there is a target response requirement and a request for master control authority transfer, the master control authority is on the slave control board in a certain load unit. In order to enable the load with the required master control authority to complete the corresponding task, the master control authority of the current host load unit can be used to facilitate the subsequent transfer of the master control authority to the first load unit to complete the authority transfer. The transfer of master control authority must be implemented through the main control board.

In actual operation, since the master control authority is on a certain load unit, the load unit may have a data transmission task in progress. In order to ensure the feasibility of the authority transfer, the data transmission task can be interrupted and the master control authority of the host load unit can be revoked. In this embodiment, the priority of ordinary data transmission tasks is lower than the operation task corresponding to the master control authority transfer.

In an embodiment, after the first load unit completes its task requirements and the main control board revokes the master control authority, the master control authority can be transferred back to the host load unit whose data transmission task has not been completed. If there are multiple host load units, the transfer order can be determined according to the priority of each task or each load unit, which is not limited in the present application.

The present application discloses a method for controlling bus communication, which is applied to a main control board, and the main control board is connected to at least one load unit through a communication bus. The method for controlling bus communication includes: in response to detecting a master control authority transfer request sent by a first load unit, determining whether there is a target response requirement from a second load unit; determining whether there is a master control authority; and in response to that there is the master control authority and there is no target response requirement, transferring the master control authority to a target load unit corresponding to the master control authority transfer request. By first detecting whether there is a target response requirement from another load unit before receiving the master control authority transfer request from the first load unit and transferring the master control authority to the first load unit, and when the main control board has the master control authority and there is no target response requirement, transferring the master control authority to the target load unit corresponding to the master control authority transfer request, thereby avoiding the technical problem in the related art that in a multi-master and multi-slave communication mode, the transfer of master control authority will lead to the inability to respond to the quick response requirements of other loads in a timely manner, thereby improving the user experience.

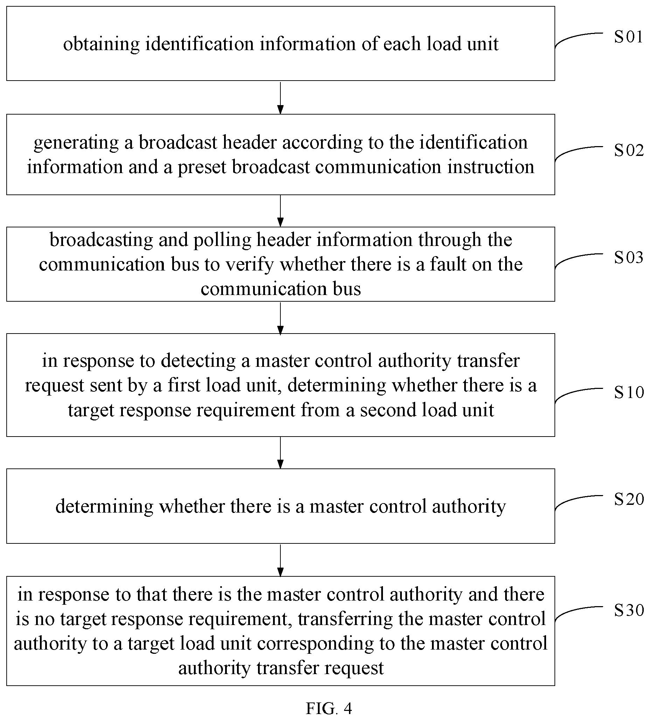

As shown in FIG. 4, which is a flowchart of the method for controlling bus communication according to a second embodiment of the present application.

Based on the first embodiment, in this embodiment, after step 520, the following steps are further included:
Step 501: obtaining identification information of each load unit.

It should be noted that the identification information may be information such as the load type, load model, and identity ID of a load unit.

Furthermore, the identification information can be used to determine the installation position or broadcasting order of each load unit on the electronic device.

Step S02: generating a broadcast header according to the identification information and a preset broadcast communication instruction.

It can be understood that the broadcast header is used for data transmission in the communication main line, the broadcast header can be composed of an interval field, a synchronization field, and an identifier field. The interval field, as the beginning of a header, can includes a period of low level. For example, the interval field can include 20 bits of low level. Because the serial port sends a data byte composed of a start bit (1 bit) + data bit (8 bits) + stop bit (1 bit or 2 bits), so 20 low levels will not appear in normal communication valid data. By detecting the interval field, it can be effectively guaranteed that the valid data of the previous frame has been sent. The synchronization field is used to synchronize the communication rate of the main control board from the control board. The synchronization field can be composed of one or more bytes of data agreed in advance, that is, the synchronization field is not limited to a single byte representation, but can also be multiple bytes, such as 0x55, etc., which is not limited in the present application. The identifier field is used to determine the type of home appliance, identification information and instruction type that the sending main control board wants to communicate with. If the main control board needs to communicate with itself, the target address can be the identification information of the main control board. If the main control board needs to communicate with the slave control board, the target address can be the identification information of the corresponding slave control board, which is not limited in the present application.

Step 503: broadcasting and polling header information through the communication bus to verify whether there is a fault on the communication bus.

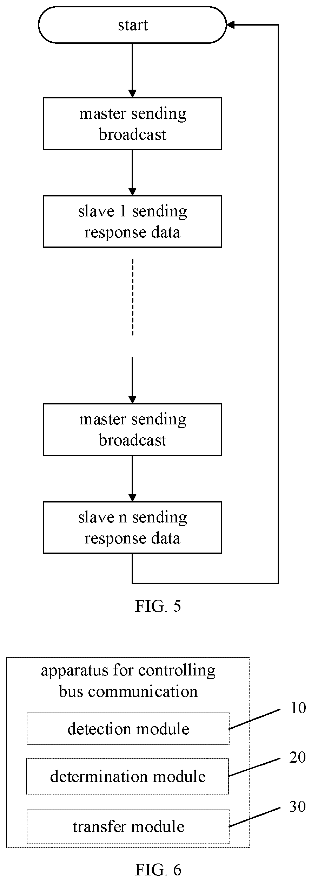

It should be noted that broadcast polling requires data communication for each communication node in the bus communication system so that each communication node can feedback response information. For example: as shown in FIG. 3, the load unit 1 now serves as the communication host and has the master control authority. At this time, if the load unit 1 needs to share data through the communication bus, the data to be sent will be uploaded to the communication main line, so that the main control board-load unit 1-load unit 2...load unit n will feedback response information in turn. Each time a feedback message is received, the load unit 1 needs to re-upload the data to be sent to the communication main line. The control logic refers to FIG. 5.

In addition, during the polling process, if the corresponding feedback signal is received in the order described above within a certain time interval, it can be directly skipped, the data to be sent can be resent, and the next feedback response signal can be received again. A 200ms timed polling method can be adopted, and the timeout time range can be within 100ms, which is not limited.

In an embodiment, the fault detection process can send a fault detection instruction according to a preset broadcast order to receive fault detection information fed back by each load unit respectively, and then the main control board performs an operation fault determination according to each fault detection information. The broadcast order can be in the order of main control board-load unit 1-load unit 2...load unit n, which is not limited in the present application.

This embodiment generates broadcast information for broadcasting through the identification information of each load unit and the preset broadcast communication instructions, and verifies whether there is a communication failure in the entire bus communication system according to the broadcast response information fed back by each load unit, so as to avoid abnormalities in subsequent authority transfer and affect the operation of the device.

In addition, the present application further provides a storage medium, on which a program for controlling bus communication is stored. When the program for controlling bus communication is executed by a processor, the steps of the method for controlling bus communication described above are implemented.

Since the storage medium adopts all the technical solutions of all the above embodiments, it has at least all the beneficial effects brought by the technical solutions of the above embodiments, which will not be described herein.

As shown in FIG. 6, which is a structural block diagram of an apparatus for controlling bus communication according to the first embodiment of the present application.

As shown in FIG6, the apparatus for controlling bus communication provided in the present application includes a processor and a memory. The processor is used to execute the following program modules stored in the memory.

A detection module 10 is configured to: in response to detecting a master control authority transfer request sent by a first load unit, determine whether there is a target response requirement from a second load unit.

It can be understood that in the conventional multi-master and multi-slave bus communication mode, as shown in FIG. 3, the bus communication system is generally composed of a main control board, at least one load unit and a communication bus, and the main control board and each load unit are connected to the communication bus. Depending on the device where the bus communication system is located, the various load units are also different. The load unit includes: a slave control board and a load component. For example, the compressor load unit includes: a compressor and a compressor slave control board, and the display panel load unit includes: a display panel and a display panel slave control board, which is not limited in the present application.

In the bus communication system, only the host communication node with master control authority can actively send data to the outside, while other communication nodes can feedback response information by receiving data on the communication main line, and some load units can also receive signal inputs from the outside. For example: interactive panels or touch displays, etc., can receive touch signal inputs from users, which is not limited in the present application.

In the bus communication system, the master control authority is generally on the main control board, which is used to respond to the requests or response signals of each load unit in a timely manner. Only after a load unit requests the transfer of master control authority from the main control board and the load unit receives the master control authority can it actively send data to the communication main line to realize active data interaction.

In addition, in the above-mentioned bus communication system, the data interaction between the main control board and each load unit is carried out through broadcast polling to realize communication between each node.

It is worth noting that the first load unit can be any energy-consuming load unit in the above-mentioned smart refrigerator. In the smart refrigerator provided in the present application, a single load is integrated with the corresponding slave control panel to form a load unit. For example: a refrigeration fan unit, a wind direction unit, a display panel unit, and a motor unit, etc., and the master control authority transfer request can be a request instruction generated by the load unit due to data packet updates, software upgrades, or data sharing needs, which is not limited in the present application.

For example: as shown in FIG. 3, load 1 in FIG. 3 needs to share data with other loads. At this time, since the master control authority is on the main control board, it is necessary to send a data sharing request to the main board under normal conditions to send the data to be shared to the main control board. After the main control board receives the data to be shared, it uploads the data to be shared to the communication main line for broadcasting. At this time, load 1 receives the data to be shared first, and load 1 will feedback a received response instruction. At this time, the main control board will upload the data to be shared to the communication main line for broadcasting again. At this time, load 1 will no longer feedback a response instruction, and load 2 will feedback a received response instruction based on the received data. The data sharing task will not be completed until all load units on the communication bus have fed back response instructions.

It should be noted that the target response requirement refers to a requirement that requires the main control board to respond quickly. For example, the user increases the refrigeration temperature of the refrigerator through the display panel or buttons. At this time, the refrigeration fan or electric fan does not need to operate immediately, but the main control board needs to immediately adjust the LED display content displayed on the display panel to facilitate the user to determine whether the temperature adjustment is successful. Adjusting the display content of the display panel requires the main control board to respond quickly. If the main control board does not have the master control authority at this time, it will cause the display of the display panel to be wrong, thereby reducing the user experience.

The determination module 20 is configured to determine whether there is a master control authority.

It should be noted that in this embodiment, the master control authority can be on the main control board or on each load unit, and the master control authority can be transferred. However, in the normal data communication process, the master control authority is generally on the main control board, and the transfer of the master control authority needs to be implemented through the main control board. The master control authority cannot be transferred directly from one load unit to another load unit.

The transfer module 30 is configured to: in response to that there is the master control authority and there is no target response requirement, transfer the master control authority to a target load unit corresponding to the master control authority transfer request.

During the specific implementation process, if the main control board receives the authority transfer instruction from the first load unit and other loads do not require a quick response, it will transfer the master control authority to the first load unit on the premise that it itself has the master control authority, so that the first load unit can perform the corresponding data processing task.

Furthermore, the transfer module 30 is further configured to:
in response to that there is the master control authority and there is the target response requirement, lock the master control authority; and
after a preset time interval, return to the determining whether there is the target response requirement from the second load unit.

It can be understood that if the main control board receives the authority transfer instruction of the first load unit, and it itself does not have the master control authority, but there is a quick response requirement for other loads, it means that the main control board needs to respond quickly to the request of the load unit. In order not to affect the user experience, at this time, the main control board needs to lock the master control authority to avoid the transfer of authority, which will lead to user control errors.

In an embodiment, since the quick response requirements of the refrigerator load unit often correspond to multiple operation processes, for example, when the user needs to lower the temperature of the refrigerator freezer, the first thing that needs to be responded to quickly is to update the temperature display value on the display panel, and secondly, it is also necessary to control the speed of the refrigeration fan corresponding to the freezer and the operating frequency of the compressor, etc. Therefore, in order to meet the user's control needs, an interval time can be set so that after the quick response requirement is completed, it returns to the step of determining whether there is a target response requirement from the second load unit, so as to re-perform the authority transfer operation.

Furthermore, the locking the master control authority includes:
determining a load unit to be operated and a corresponding operation task according to the target response requirement and a preset load unit priority; and
in response to that the load unit to be operated has not completed the operation task, lock the master control authority.

It should be noted that since there may be multiple load units controlled by a target response requirement, in the actual control process, it may not be necessary to perform authority control on each load unit that needs to be operated. For example, when the user needs to lower the temperature of the freezer compartment of the refrigerator, it is first necessary to control the numerical display of the display panel, and secondly, control the speed of the refrigeration fan corresponding to the freezer compartment and the operating frequency of the compressor, etc. However, the refrigeration fan and compressor do not require real-time and quick control by the main control board. Therefore, the only load unit to be operated is the display panel. When the display panel has not completed the task of updating the numerical value, the main control board's master control authority needs to be locked to avoid display errors.

Furthermore, the transfer module 30 is further configured to:
in response to that there is no master control authority and there is a target response requirement, determine a host load unit with the master control authority; and
revoke the master control authority of the host load unit.

It is worth noting that when the main control board does not have master control authority, but there is a target response requirement and a request for master control authority transfer, the master control authority is on the slave control board in a certain load unit. In order to enable the load with the required master control authority to complete the corresponding task, the master control authority of the current host load unit can be used to facilitate the subsequent transfer of the master control authority to the first load unit to complete the authority transfer. The transfer of master control authority must be implemented through the main control board.

In actual operation, since the master control authority is on a certain load unit, the load unit may have an ongoing data transmission task. In order to ensure the feasibility of the authority transfer, the data transmission task can be interrupted and the master control authority of the host load unit can be revoked. In this embodiment, the priority of ordinary data transmission tasks is lower than the operation task corresponding to the master control authority transfer.

In an embodiment, after the first load unit completes its task requirements and the main control board revokes the master control authority, the master control authority can be transferred back to the host load unit whose data transmission task has not been completed. If there are multiple host load units, the transfer order can be determined according to the priority of each task or each load unit, which is not limited in the present application.

The present application discloses a method for controlling bus communication, which is applied to a main control board, and the main control board is connected to at least one load unit through a communication bus. The method for controlling bus communication includes: in response to detecting a master control authority transfer request sent by a first load unit, determining whether there is a target response requirement from a second load unit; determining whether there is a master control authority; and in response to that there is the master control authority and there is no target response requirement, transferring the master control authority to a target load unit corresponding to the master control authority transfer request. By first detecting whether there is a target response requirement from another load unit before receiving the master control authority transfer request from the first load unit and transferring the master control authority to the first load unit, and when the main control board has the master control authority and there is no target response requirement, transferring the master control authority to the target load unit corresponding to the master control authority transfer request, thereby avoiding the technical problem in the related art that in a multi-master and multi-slave communication mode, the transfer of master control authority will lead to the inability to respond to the quick response requirements of other loads in a timely manner, thereby improving the user experience.

It should be understood that the above is only an example and does not constitute any limitation on the technical solution of the present application. In specific applications, those skilled in the art can make settings as needed, which is not limited in the present application.

It should be noted that the workflow described above is merely illustrative and does not limit the scope of protection of the present application. In practical applications, those skilled in the art can select part or all of them according to actual needs to achieve the purpose of the present embodiment, which is not limited in the present application.

In addition, for technical details that are not described in detail in this embodiment, please refer to the method for controlling bus communication provided in any embodiment of the present application, and will not be repeated here.

In addition, it should be noted that, in this article, the terms "include", "comprises" or any other variations thereof are intended to cover non-exclusive inclusion, so that a process, method, article or system including a series of elements includes not only those elements, but also includes other elements not explicitly listed, or also includes elements inherent to such process, method, article or system. In the absence of further restrictions, an element defined by the sentence "comprises a..." does not exclude the existence of other identical elements in the process, method, article or system including the element.

The serial numbers of the above-mentioned embodiments of the present application are for description only and do not represent the advantages or disadvantages of the embodiments.

Through the description of the above implementation methods, those skilled in the art can clearly understand that the above-mentioned implementation methods can be implemented by means of software plus a necessary general hardware platform, and of course by hardware, but in many cases the former is a better implementation method. Based on this understanding, the technical solution of the present application, or the part that contributes to the prior art, can be embodied in the form of a software product, which is stored in a storage medium (such as a read-only memory (ROM)/RAM, a magnetic disk, or an optical disk), and includes a number of instructions for a terminal device (which can be a mobile phone, a computer, a server, or a network device, etc.) to execute the methods described in each embodiment of the present application.

The above are only some embodiments of the present application, and are not intended to limit the patent scope of the present application. Any equivalent structure or equivalent process transformation made using the contents of the present application specification and drawings, or directly or indirectly applied in other related technical fields, are also included in the patent protection scope of the present application.

## Claims

1. A method for controlling bus communication, applied to a main control board, wherein the main control board is connected to at least one load unit through a communication bus, the method **characterized by** comprising:
in response to detecting a master control authority transfer request sent by a first load unit, determining whether there is a target response requirement from a second load unit;
determining whether there is a master control authority; and
in response to that there is the master control authority and there is no target response requirement, transferring the master control authority to a target load unit corresponding to the master control authority transfer request.

2. The method for controlling bus communication of claim 1, wherein after the determining whether there is the master control authority, the method further comprises:
in response to that there is no master control authority and there is a target response requirement, determining a host load unit with the master control authority; and
revoking the master control authority of the host load unit.

3. The method for controlling bus communication of claim 2, wherein the revoking the master control authority of the host load unit comprises:
detecting whether there is an ongoing data transmission task in the host load unit; and
in response to that there is the ongoing data transmission task in the host load unit, interrupting the data transmission task and revoking the master control authority of the host load unit.

4. The method for controlling bus communication of claim 3, wherein after the detecting whether there is the ongoing data transmission task in the host load unit, the method further comprises:
in response to that there is no ongoing data transmission task in the host load unit, controlling the target load unit to release the master control authority and revoking the master control authority.

5. The method for controlling bus communication of any one of claims 1 to 4, wherein after the determining whether there is the master control authority, the method further comprises:
in response to that there is the master control authority and there is the target response requirement, locking the master control authority; and
after a preset time interval, returning to the determining whether there is the target response requirement from the second load unit.

6. The method for controlling bus communication of claim 5, wherein the locking the master control authority comprises:
determining a load unit to be operated and a corresponding operation task according to the target response requirement and a preset load unit priority; and
in response to that the load unit to be operated has not completed the operation task, locking the master control authority.

7. The method for controlling bus communication of any one of claims 1 to 6, wherein before the in response to detecting the master control authority transfer request sent by the first load unit, determining whether there is the target response requirement from the second load unit, the method further comprises:
obtaining identification information of each load unit;
generating a broadcast header according to the identification information and a preset broadcast communication instruction; and
broadcasting and polling header information through the communication bus to verify whether there is a fault on the communication bus;
and wherein the in response to detecting the master control authority transfer request sent by the first load unit, determining whether there is the target response requirement from the second load unit comprises:
in response to that there is no fault and the master control authority transfer request sent by the first load unit is detected, determining whether there is the target response requirement from the second load unit.

8. An apparatus for controlling bus communication, **characterized by** comprising a processor and a memory, wherein the processor is configured to execute the following program modules stored in the memory:
a detection module configured to: in response to detecting a master control authority transfer request sent by a first load unit, determine whether there is a target response requirement from a second load unit;
a determination module configured to determine whether there is a master control authority; and
a transfer module configured to: in response to that there is the master control authority and there is no target response requirement, transfer the master control authority to a target load unit corresponding to the master control authority transfer request.

9. The apparatus for controlling bus communication of claim 8, wherein the determination module is further configured to:
in response to that there is no master control authority and there is a target response requirement, determine a host load unit with the master control authority; and
revoke the master control authority of the host load unit.

10. The apparatus for controlling bus communication of claim 9, wherein the determination module is further configured to:
detect whether there is an ongoing data transmission task in the host load unit; and
in response to that there is the ongoing data transmission task in the host load unit, interrupt the data transmission task and revoke the master control authority of the host load unit.

11. The apparatus for controlling bus communication of claim 10, wherein the determination module is further configured to:
in response to that there is no ongoing data transmission task in the host load unit, control the target load unit to release the master control authority and revoke the master control authority.

12. The apparatus for controlling bus communication of any one of claims 8 to 11, wherein the determination module is further configured to:
in response to that there is the master control authority and there is the target response requirement, lock the master control authority; and
after a preset time interval, return to the determining whether there is the target response requirement from the second load unit.

13. The apparatus for controlling bus communication of claim 12, wherein the determination module is further configured to:
determine a load unit to be operated and a corresponding operation task according to the target response requirement and a preset load unit priority; and
in response to that the load unit to be operated has not completed the operation task, lock the master control authority.

14. The apparatus for controlling bus communication of any one of claims 8 to 13, the detection module is further configured to:
obtain identification information of each load unit;
generate a broadcast header according to the identification information and a preset broadcast communication instruction; and
broadcast and poll header information through the communication bus to verify whether there is a fault on the communication bus;
and wherein the in response to detecting the master control authority transfer request sent by the first load unit, determining whether there is the target response requirement from the second load unit comprises:
in response to that there is no fault and the master control authority transfer request sent by the first load unit is detected, determining whether there is the target response requirement from the second load unit.

15. A device for controlling bus communication, **characterized by** comprising:
a memory;
a processor; and
a program for controlling bus communication stored in the memory and executable on the processor,
wherein the program for controlling bus communication is configured to implement a method for controlling bus communication according to any one of claims 1 to 7.

16. A storage medium, **characterized in that**, a program for controlling bus communication is stored on the storage medium, and when the program for controlling bus communication is executed by a processor, a method for controlling bus communication according to any one of claims 1 to 7 is implemented.

17. A computer program product, **characterized by** comprising a computer program, wherein when the computer program is executed by a processor, a method for controlling bus communication according to any one of claims 1 to 7 is implemented.
